# DEMANDE DE BREVET EUROPEEN

(11) **EP 0 635 610 A1**
(43) Date de publication de la demande: **25.01.1995**
(21) Numéro de dépôt: 94401661.7
(22) Date de dépôt: 19.07.1994
(51) Int. Cl.: E05B 49/00, G06K 7/06

(54) **Clé à circuit intégré et connecteur notamment pour une telle clé**

(30) Priorité: 22.07.1993 FR 9309057
(71) Demandeur: GEMPLUS CARD INTERNATIONAL, F-13420 Gemenos (FR)
(72) Inventeur: Dedisse, Nicolas, F-94230 Cachan (FR)
(74) Mandataire: Schmit, Christian Norbert Marie

(57) **Abrégé**

L'invention concerne les clés électroniques du type "à puce" et les connecteurs destinés à fonctionner avec ces clés.

Elle consiste à prévoir une rainure de verrouillage (402) située sur la face de la clé opposée à celle qui supporte la puce, dans une position intermédiaire entre cette puce et l'extrémité avant de la clé. Les moyens de verrouillage (402) de la serrure pressent donc la clé vers les moyens de connexion (201) qui sont situés au-dessus de la clé. On élimine ainsi les jeux et on évite l'encrassement des contacts.

Elle permet d'utiliser pour la puce et ses moyens de connexion le standard connu des cartes à puce.

## Description

La présente invention se rapporte aux clés qui comprennent un circuit intégré permettant de substituer aux caractéristiques mécaniques formant habituellement l'originalité et la sécurité d'une clé des caractéristiques électroniques. Elle concerne également les connecteurs destinés à recevoir un objet tel qu'une clé de ce type pour établir les contacts avec le dispositif électronique formant dans ce cas les organes principaux de la serrure à laquelle est adaptée la clé.

Les avantages des clés comportant un circuit intégré sont bien connus, notamment en matière de discrétion et de facilité de neutralisation en cas de perte de la clé. Les diverses réalisations connues à ce jour présentent néanmoins un certain nombre d'inconvénients essentiellement liés à l'adaptation de la clé avec le connecteur formant la serrure, pour avoir un fonctionnement aussi fiable que pour les clés purement mécaniques.

Pour pallier ces inconvénients, l'invention propose une clé électronique, du type comprenant une partie allongée destinée à être introduite dans un connecteur adaptée à la clé, un circuit intégré muni de moyens de connexion affleurant sur l'une des faces de cette partie allongée, et une rainure de verrouillage transversale à cette partie allongée, principalement caractérisée en ce que cette rainure est située sur la face opposée à celle sur laquelle affleurent les contacts du circuit intégré.

L'invention propose également un connecteur pour objet muni d'un circuit intégré, notamment pour clé électronique, du type comportant une grille de connexion pour se connecter à des moyens de connexion du circuit intégré de l'objet, un mécanisme pour mettre en contact cette grille avec ces moyens de connexion, des moyens de verrouillage destinés à immobiliser de manière déterminée l'objet par rapport à la grille de connexion, ce connecteur étant principalement caractérisé en ce que les moyens de verrouillage agissent dans un sens opposé au sens de fonctionnement du mécanisme de mise en contact.

D'autres particularités et avantages de l'invention apparaîtront clairement dans la description suivante, faite à titre d'exemple non-limitatif en regard des figures annexées qui représentent :
- la figure 1, une vue partielle et en perspective cavalière d'une glissière d'un dispositif de connexion selon l'invention;
- la figure 2, une vue en perspective cavalière d'un support de grille de connexion destiné à coulisser dans la glissière de la figure 1;
- la figure 3, une vue en perspective cavalière d'une clé selon l'invention;
- la figure 4, une vue en coupe de côté de l'extrémité de cette clé et d'un verrou destiné à solidariser la clé et la glissière; et
- la figure 5, une vue en coupe de face de la clé de la figure 3.

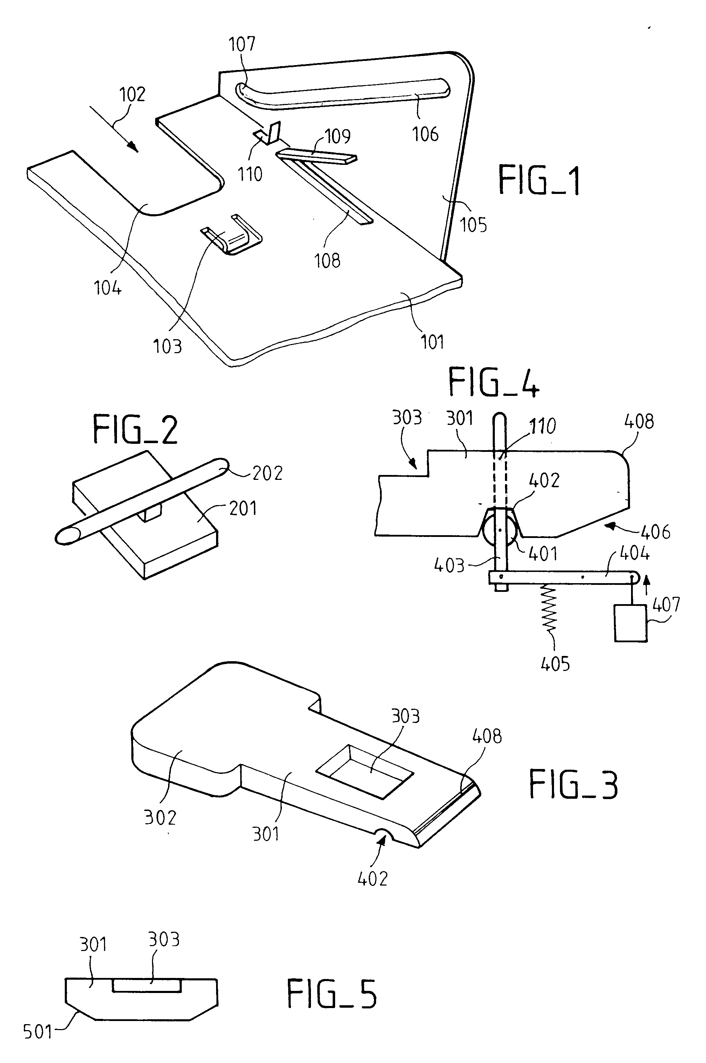

Pour utiliser une clé électronique, on l'introduit comme une clé ordinaire dans la fente d'une serrure adéquate qui comprend notamment un connecteur particulier permettant d'établir les contacts avec les points de connexion du circuit intégré, généralement appelé "puce", inséré dans la clé. Ce connecteur comprend diverses parties pouvant être réalisées selon des modalités diverses dont certaines sont bien connues. Il est notamment connu d'utiliser une glissière dans laquelle vient s'insérer la clé et dont le mouvement de recul met en oeuvre divers mécanismes qui viennent assurer, en particulier, les contacts avec la puce de la clé et le verrouillage de celle-ci.
Pour faciliter la description de l'invention, on a représenté sur la figure 1 uniquement la glissière proposée dans l'invention, de manière à la fois simplifiée et partielle pour permettre une lecture facile du dessin.

Cette glissière est composée d'une platine 101 en-dessous de laquelle la clé vient s'insérer dans son mouvement d'introduction dans la serrure, représenté par la flèche 102. Après avoir glissé sous la surface de cette platine, l'extrémité avant de la clé vient buter sur un ergot 103 qui est estampé au milieu de la platine. Le mouvement relatif de la clé et de la platine s'arrête alors et la clé se retrouve positionnée par rapport à la platine, de telle manière que les contacts de la puce contenue dans la clé se retrouvent au centre d'une échancrure sensiblement rectangulaire 104 dégagée à l'extrémité arrière de la platine, de façon à permettre l'accès à ces contacts pour établir les connexions nécessaires. A ce moment la clé n'est qu'à moitié engagée dans la serrure.

Le mouvement d'enfoncement de la clé se poursuit alors et celle-ci entraîne la glissière, puisqu'elle est immobilisée contre l'ergot 103. Le connecteur comprend, bien entendu, des moyens élastiques tel qu'un ressort, qui permettent de repousser la glissière dans le sens inverse du mouvement 102 pour, d'une part assurer le positionnement relatif de la clé et de la glissière et d'autre part, repousser celle-ci dans sa position de repos lorsqu'on déverrouillé la clé.

La glissière comporte en outre deux flasques latérales 105 fixées sur les côtés de la platine 101, perpendiculairement au plan de celle-ci et parallèlement au mouvement 102. Ces flasques comportent des fentes inclinées de haut en bas et de l'arrière vers l'avant de la glissière (l'avant est par convention le côté où l'on introduit la clé). Ces fentes se terminent par une petite portion sensiblement horizontale 107.

Ces fentes permettent de manoeuvrer une pièce de connexion représentée sur la figure 2. Cette pièce de connexion comprend un support 201 de dimensions adaptées à celles de l'échancrure 104 et relié à la partie inférieure d'une barre horizontale 202. Une grille de contact adaptée aux connexions de la puce de la clé est fixée sur la face inférieure du support 201 et elle est invisible sur la figure. Un ensemble de fils souples de connexion, non représentés sur la figure, permet de relier cette grille de contact aux organes électroniques de la serrure, connus en eux-mêmes. Les deux extrémités de la barre 202 viennent s'engager dans les fentes 106 des flasques 105. Elles sont réunies aux parties fixes (non représentées) de la serrure, dans lesquelles coulisse la glissière, de manière à pouvoir se déplacer uniquement dans le sens vertical. Ainsi lorsque la glissière recule sous l'action de la clé, la barre 202 vient glisser dans les fentes 106 et l'inclinaison de celles-ci entraîne la descente de la barre, et du support 201 qui lui est relié, vers la surface supérieure de la platine 101. A la fin de ce mouvement, le support 201 vient se loger dans l'échancrure 104 et la barre 202 s'immobilise dans la petite partie horizontale 107 de la fente 106, ce qui solidarise le support 201 par rapport la platine 101.

La clé selon l'invention qui est représentée sur la figure 3 est réalisée par moulage d'une matière plastique. Sa forme est unique pour toutes les clés, ce qui est l'un des avantages connus des clés électroniques, et elle comporte une partie allongée 301 ayant globalement la forme d'un parallélépipède rectangle mais dont les faces sont modifiées pour remplir différentes fonctions qui seront décrites plus loin. Cette partie allongée joue le rôle du panneton d'une clé mécanique ordinaire. Elle se termine par une partie plus large 302 qui sert de poignée à la clé.

La clé est représentée sur cette figure en perspective cavalière dans sa position d'utilisation normale, et la face supérieure de la figure correspond à celle qui sera, selon l'invention, située horizontalement et au-dessus lorsqu'on se servira de la clé.

Sur cette face supérieure on a ménagé une cavité borgne 303 sensiblement parallélépipèdique qui permet de loger le circuit intégré qui contient les données permettant d'individualiser la clé et de l'associer à la serrure qu'elle permet d'ouvrir. Cette puce est associée à un dispositif de connexion, formé par exemple d'un morceau de circuit imprimé gravé de manière adéquate, comme par exemple ceux utilisés dans les cartes bancaires dites "à puce". Ce système de connexion et sa liaison à la puce sont bien connus dans cette technique des cartes à puce. L'ensemble est alors placé dans la cavité où il est scellé à l'aide d'une colle adaptée à cet usage, de la même manière que dans les cartes à puce. La cavité elle-même est façonnée de manière à ce que les contacts soient légèrement en retrait par rapport à la surface du panneton 301, pour protéger ces contacts, en particulier contre les frottements avec les lèvres de l'ouverture de la serrure quand on vient insérer la clé dans celle-ci.

L'emplacement et les dimensions de la cavité 303 sont déterminés pour que ceux-ci viennent se placer juste sous l'échancrure 104 lorsque la clé est immobilisée par rapport à la glissière par l'ergot 103.

Ainsi lorsque la glissière termine son mouvement, la grille de contact fixée sur le support 201 vient pénétrer dans l'extrémité supérieure de la cavité 303 pour établir les contacts avec les connexions de la puce située dans cette cavité.

La position vers le haut de l'ouverture de la cavité 303, et donc des organes de connexion de la puce, permet d'éviter que la grille de connexion située sur le support 201 ne vienne s'encrasser avec les débris divers qui viendraient s'accumuler sur elle-même si elle était placée dans le sens contraire, avec ses contacts vers le haut.

Afin de pouvoir introduire la clé systématiquement dans le bon sens, on donne à la section droite de la partie 301 une forme particulière représentée sur la coupe transversale de la figure 5. Cette forme permet entre autres un détrompage en empêchant d'insérer la clé dans l'ouverture de la serrure; cette ouverture ayant la même forme que celle de cette section droite. Pour cela les angles inférieurs de la partie 301 sont rabattus pour obtenir des chanfreins 501, présentant par exemple un angle de 35 degrés par rapport à l'horizontale, ce qui donne à cette section une allure globalement trapézoïdale. On conçoit bien que si l'ouverture destinée à introduire la clé présente cette même forme, on ne puisse introduire celle-ci que dans un seul sens, avec la cavité 303 vers le haut.

En outre, cette disposition permet de concentrer l'essentiel de l'usure des faces de la clé, provenant du frottement sur l'ouverture de la serrure, sur la face inférieure de cette clé, ce qui permet de maintenir dans le temps le positionnement de la face supérieur dans des tolérances correctes vis-à-vis de la grille de contact.

En outre, selon une disposition généralement retenue, on prévoit des moyens pour verrouiller la clé dans la serrure pendant tout le temps des échanges d'informations entre la puce de la clé et le système électronique de la serrure, afin que cette opération puisse se faire en toute sécurité, en particulier pour protéger électriquement aussi bien la puce que les organes de la serrure.

Ces moyens de verrouillage sont représentés schématiquement selon la figure 4 en liaison avec une coupe longitudinale de l'extrémité avant de la partie 301 de la clé.

Ces moyens comportent un verrou 401 qui vient s'engager dans une rainure transversale 402 ménagée sur la face inférieure de la partie 301, et donc sur la face opposée à celle qui porte la puce. Ce verrou est formé de préférence d'un rouleau horizontal qui est soutenu par un ensemble de bras articulés 403 et 404 repoussés par le haut par un ressort 405. Selon une première variante, lorsqu'on enfonce la clé, l'extrémité de celle-ci vient buter sur le rouleau 401 qui descend, puis elle roule sur la face inférieure de la clé et elle remonte ensuite pour s'engager dans la rainure 402. Cette action se produit à la fin du mouvement de la clé et verrouille celle-ci dans la serrure. Afin de faciliter la descente du rouleau lorsque l'extrémité de la clé vient buter contre elle, la face inférieure de celle-ci est biseautée pour former un dégagement 406 présentant par exemple un angle de 35 degrés avec l'horizontale.

Selon une variante préférée, le bras vertical 403 présente la forme d'une fourchette à deux doigts qui viennent s'engager dans des fentes latérales 108 ménagées dans la platine 101 par estampage de lames 109 recourbées vers le haut selon un angle aigu. Ces lames forcent la fourchette 403 à s'enfoncer, en entraînant le rouleau qui ne bute donc plus sur la rampe 406. En fin de course, les doigts de la fourchette rencontrent des ouvertures 110 ménagées à l'arrière des fentes 108. Ils s'y enfoncent en permettant au rouleau 401 de remonter et de s'engager dans la rainure 402. On diminue ainsi l'usure de la clé et du verrou, ce qui permet par exemple de simplifier la construction de celui-ci en remplaçant le rouleau par une partie plate allongée horizontalement de la barre 403.

Sous l'action du ressort 405 le rouleau 401 appuie donc sur les parois de la rainure 402 et vient plaquer la clé contre la face inférieure de la platine 101 de la glissière, ce qui maintient les deux pièces l'une par rapport à l'autre selon une position relative bien définie, et permet de rattraper les jeux inévitables. On peut ainsi obtenir une bien meilleure précision au niveau de la grille de contact supportée par la plaque 201, et donc tolérer des jeux initiaux plus grands que dans le cas où le verrou serait positionné sur le haut de la clé, du côté de la puce..

En outre, l'invention propose également de situer la rainure 402 en avant de la cavité 303, entre celle-ci et l'extrémité avant de la clé, mais bien entendu toujours sur la face opposée à celle comportant cette cavité. Ainsi on peut utiliser un ressort 405 suffisamment ferme pour maintenir très efficacement la clé dans la serrure sans risquer de déformer celle-ci au niveau de la puce et de venir la détériorer.

Lorsque les échanges d'informations entre la puce et les circuits électroniques de la serrure sont terminés, ceux-ci commandent l'interruption des connexions électriques. En particulier la tension d'alimentation de la puce disparaît, et pour libérer la clé ces mêmes organes électroniques commandent l'action d'un moteur 407, un électro-aimant par exemple, qui vient faire basculer le levier 404, ce qui fait redescendre le rouleau 401 et permet d'éjecter la clé, sous l'action des moyens élastiques qui repoussent la glissière en arrière.

A titre de sécurité, pour le cas où cette action échouerait, par exemple par suite d'une défaillance de l'électro-aimant 407, l'invention prévoit en outre que la rainure 402 présente une section sensiblement trapézoïdale avec des flans latéraux légèrement inclinés, de 16 degrés par exemple, vers l'intérieur de la rainure. De cette manière, on peut toujours en tirant très fort sur la clé faire riper le rouleau 401 sur la face inclinée la plus en avant de la rainure 402, ce qui force alors ce rouleau à descendre vers le bas et permet de dégager mécaniquement la clé. Bien entendu la force du ressort 405 sera étudiée pour que cette action ne risque pas de provoquer une rupture de la clé.

Enfin l'invention propose également que l'arête supérieure 408 de l'extrémité de la clé soit arrondie, selon par exemple un rayon de 0,5 mm, afin de pouvoir s'adapter à l'extrémité de l'ergot 103. En effet la platine 101, ainsi que beaucoup d'autres éléments de la glissière et de la serrure, sont de préférence fabriqués par estampage afin de diminuer les coûts. Dans ces conditions l'extrémité de l'ergot 103, replié vers le bas, présente nécessairement à l'intérieur un arrondi dont le rayon est relativement important tout en étant défini avec une précision assez faible. Si donc l'arête qui vient buter à cet endroit était vive, le point de contact entre la clé et l'extrémité de l'ergot serait défini d'une manière relativement imprécise, ce qui pourrait entraîner des mauvais contacts au niveau de la grille de connexion avec la puce de la clé. En arrondissant cette arête d'une manière suffisante, celle-ci ne vient plus porter dans l'angle de l'extrémité rabattue de l'ergot et c'est la partie plate de cette extrémité rabattue qui vient recevoir la partie plate de l'extrémité de la clé. Ceci réduit considérablement les tolérances de positionnement entre la clé et l'ergot, et donc entre la clé et la glissière.

## Revendications

1. Connecteur pour objet muni d'un circuit intégré notamment pour clé électronique à contacts affleurants, destiné à permettre l'échange d'informations avec un appareil, le connecteur comportant une glissière pour l'insertion de la clé, un mécanisme comportant une grille de connexion pour assurer la connexion avec le circuit intégré et des moyens de verrouillage caractérisé en ce que : les moyens de verrouillage comportent un rouleau (407) soutenu par un bras articulé (403, 404) placé au dessous de la platine, le rouleau étant destiné à se loger dans une rainure ménagée sous la clé de manière à verrouiller tout mouvement de la clé dans le connecteur pendant la durée d'échange d'information.

2. Connecteur pour objet muni d'un circuit intégré selon la revendication 1, caractérisé en ce que la glissière comporte une platine (101) encadrée par deux flaques (105), la platine étant munie d'une échancrure (104) devant laquelle est placé un ergot (103) contre lequel vient buter la clé lorsque cette dernière est glissée sous la platine, les contacts de la clé se trouvant dans l'échancrure, et en ce que
- le mécanisme comportant la grille de connexion est apte à se positionner au dessus des contacts dans l'échancrure.

3. Connecteur selon la revendication 1, caractérisé en ce que le bras articulé est actionné par un moteur électrique (407) commandé par l'électronique de l'appareil.

4. Connecteur selon la revendication 1, caractérisé en ce que les moyens de verrouillage comprennent en outre des moyens élastiques (405) pour repousser le verrou (401) dans sa position de verrouillage.

5. Connecteur selon la revendication 4, caractérisé en ce que le ressort (405) est taré pour permettre l'effacement du verrou (401) sous l'effet de la seule traction mécanique de l'objet.

6. Connecteur selon l'une quelconque des revendications précédentes, caractérisé en ce que la glissière est mobile (101) et est destinée à se déplacer sous la pression de la clé (301), en ce qu'il comprend une plaque réctractable (201) supportant la grille de connexion, et des moyens (106, 107, 202) de liaison entre la glissière et la plaque rétractable pour faire mouvoir cette plaque vers la position finale des moyens de connexion du circuit intégré de l'objet lorsque la glissière s'immobilise à la fin de son trajet.

7. Connecteur selon la revendication 6 caractérisé en ce que la plaque rétractable et manoeuvrée au moyen d'une barre (202) dont les deux extrémités sont engagées dans des fentes inclinées (106) ménagée dans des flasques.
